# FASCICULE DE BREVET EUROPEEN

(11) **EP 3 070 798 B1**
(45) Date de publication et mention de la délivrance du brevet: **05.05.2021**
(21) Numéro de dépôt: 15193591.3
(22) Date de dépôt: 09.11.2015
(51) Int. Cl.: H02H 9/04

(54) **DISPOSITIF DE PROTECTION CONTRE DES SURTENSIONS**
SCHUTZVORRICHTUNG GEGEN ÜBERSPANNUNGEN
DEVICE FOR SURGE PROTECTION

(30) Priorité: 19.03.2015 FR 1552260
(43) Date de publication de la demande: 21.09.2016
(73) Titulaire: STMicroelectronics (Tours) SAS, 37100 Tours (FR)
(72) Inventeur: HEURTIER, Jérôme, 37000 TOURS (FR); BOUGRINE, Guillaume, 37000 TOURS (FR); ROUVIERE, Mathieu, 37100 TOURS (FR)
(74) Mandataire: Cabinet Beaumont

(56) Documents cités:
- EP-A1- 0 466 619
- DE-A1-102013 208 180
- US-A1- 2014 293 493

## Description

### Domaine

La présente demande concerne un dispositif de protection contre des surtensions, et vise plus particulièrement un dispositif de protection contre des surtensions adapté à la protection d'une ligne d'alimentation.

### Exposé de l'art antérieur

Un composant de protection contre des surtensions est un composant qui devient passant quand la tension à ses bornes dépasse un certain seuil, appelé tension de claquage couramment désignée par l'abréviation V_{BR}.

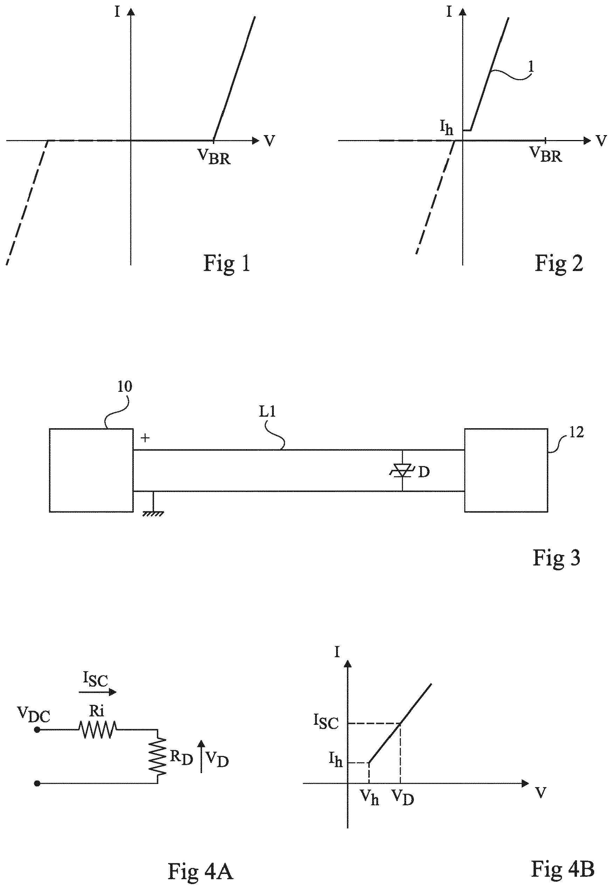

Un premier type de composant de protection est du type diode à avalanche dont la caractéristique courant-tension est illustrée en figure 1. Quand la tension aux bornes de ce composant dépasse la tension de claquage V_{BR}, le composant devient passant. Idéalement, la tension aux bornes du composant reste égale à V_{BR} tandis que le courant augmente. En fait, comme cela est représenté en figure 1, la caractéristique n'est pas verticale et la tension aux bornes du composant dépasse la valeur V_{BR} tandis que la surtension est absorbée, c'est-à-dire qu'un courant I de forte valeur traverse le composant.

Un inconvénient de ce type de composant est que pendant la phase d'absorption de la surtension, la tension aux bornes du composant demeure supérieure ou égale à la tension de claquage V_{BR}, c'est-à-dire que, pendant cette phase, le composant doit absorber une puissance supérieure à V_{BR}xI. Ceci conduit à devoir réaliser un composant de dimension suffisamment importante d'une part pour minimiser sa résistance interne et ainsi la tension à ses bornes pendant la phase d'évacuation de la surtension, et d'autre part pour qu'il puisse absorber la puissance liée à la surtension sans être détruit. Couramment, pour des tensions V_{BR} supérieures à 100 volts, par exemple de l'ordre de 300 volts, ceci conduit à des dimensions de composants supérieures à plusieurs cm², par exemple de l'ordre de 10 cm². De tels composants sont parfois réalisés sous forme d'un empilement de puces de diodes, par exemple un empilement de quatorze puces élémentaires ayant chacune une surface de 8,6 x 8,6 mm² pour atteindre une tension de claquage de 430 V. De tels composants sont donc coûteux et encombrants.

Un second type de composant de protection est du type à retournement, de type diode de Shockley ou thyristor sans gâchette. La caractéristique courant-tension d'un composant à retournement est illustrée en figure 2. Quand la tension aux bornes du composant dépasse la tension de claquage V_{BR}, cette tension chute rapidement puis se déplace le long d'une caractéristique 1 sensiblement verticale.

Un avantage de ce second type de composant est que la puissance dissipée par la surtension dans le composant est faible devant la puissance dissipée dans un dispositif du type diode à avalanche étant donné que la tension aux bornes du composant est très faible pendant l'écoulement de la surintensité. Un inconvénient de ce second type de composant est que, tant qu'il existe une tension significative aux bornes du composant, celui-ci reste passant, le composant de protection ne se rebloquant que si la tension à ses bornes est telle que le courant dans ce composant devient inférieur à un courant de maintien Iₕ. Pour un composant de protection dont la tension de claquage V_{BR} est de l'ordre de 50 à 1000 volts, ce courant de maintien a couramment une valeur de l'ordre de 100 mA à 1 A selon la tension de claquage du composant.

En conséquence, les composants de protection de type à retournement sont réservés à des circuits dans lesquels ces composants sont destinés à protéger une ligne dont le potentiel de fonctionnement passe par des valeurs nulles - c'est en particulier le cas d'une ligne de transmission de données.

Comme l'illustre la figure 3, si on veut protéger une ligne L1 constituant une ligne d'alimentation connectée à la sortie d'un dispositif d'alimentation tel qu'une centrale solaire 10, reliée par exemple à un onduleur 12, on ne pourra normalement pas utiliser un composant de protection à retournement car, après l'apparition d'une surtension, correspondant par exemple à un coup de foudre sur la ligne L1, le potentiel sur cette ligne L1 reste positif et le composant de protection reste passant.

Comme l'illustre la figure 4A, après application de la surtension, la tension V_{DC} à la sortie de la source d'alimentation 10 est en court-circuit et il y circule un courant de court-circuit I_{SC}. La source voit à ses bornes sa résistance interne Ri et la résistance à l'état passant R_{D} de la diode de protection. Il existe alors aux bornes de la diode de protection un potentiel V_{D} = V_{DC}(R_{D}/(Ri+R_{D})).

La figure 4B représente une portion de la courbe caractéristique de la diode correspondant à ce cas particulier. Dans la plupart des configurations pratiques, le potentiel V_{D} correspondant au courant de court-circuit I_{SC} est nettement supérieur au potentiel Vₕ correspondant au courant de maintien Iₕ du composant à retournement. A titre d'exemple, pour un courant de maintien Iₕ de 150 mA, la tension Vₕ peut être de l'ordre de 2 V. Il n'est donc a priori pas possible d'utiliser un composant à retournement pour protéger une ligne d'alimentation continue. On se trouve donc amené, comme on l'a indiqué précédemment, à utiliser des dispositifs de protection de type diodes à avalanche qui doivent avoir des surfaces importantes et donc un coût élevé.

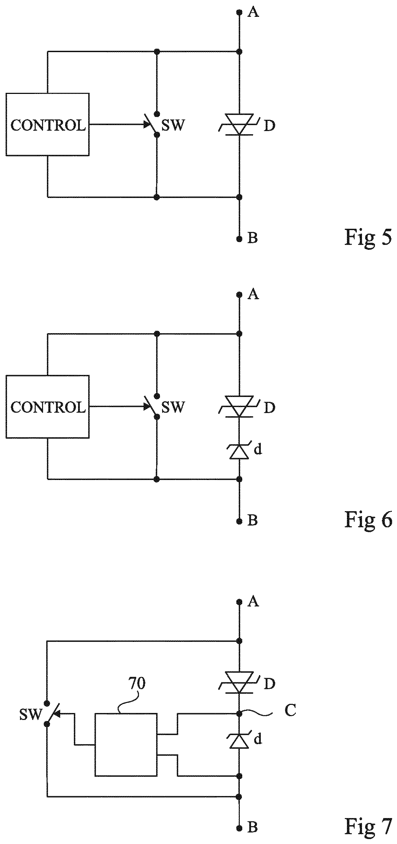

La figure 5 illustre un exemple d'un dispositif de protection déjà proposé par la demanderesse pour résoudre cet inconvénient. Ce dispositif est décrit dans la demande de brevet français N°1352864 (et dans la demande de brevet US correspondante N° 14229018. Ce dispositif comporte, entre deux bornes A et B, le montage en parallèle :
- d'une diode de protection de type à retournement D,
- d'un commutateur SW, et
- d'un circuit de commande (CONTROL) du commutateur SW.

Le fonctionnement du dispositif de protection de la figure 5 est le suivant.

Au repos, le commutateur SW est ouvert. Les bornes A et B sont connectées aux bornes d'une ligne d'alimentation continue, de sorte que l'ensemble du dispositif de protection est connecté par exemple comme la diode D de la figure 3. Tant que la tension aux bornes AB reste inférieure à la tension de claquage de la diode à retournement D, le dispositif de protection est non passant. Quand une surtension apparaît, la diode de protection devient passante et l'on se retrouve dans la configuration de la figure 4A, c'est-à-dire que l'alimentation reliée entre les bornes AB est en court-circuit. Une fois la surtension passée, on retrouve dans la diode D un courant de court-circuit I_{SC} tel que défini en relation avec la figure 4A. A ce moment, on ferme le commutateur SW de sorte que le courant entre les bornes A et B est dérivé par le commutateur SW. Si la résistance à l'état passant Rₒₙ du commutateur SW est suffisamment faible, et en particulier si la condition RₒₙxI_{sc} < Vₕ est respectée, la tension entre les bornes A et B devient inférieure à la tension Vₕ, et la diode à retournement D se bloque. Le commutateur SW peut alors être à nouveau ouvert.

Selon une première possibilité, le circuit de commande comprend un détecteur de surtension et ferme automatiquement le commutateur SW pendant une durée déterminée, un certain temps après que la surtension aura été détectée, puis ouvre le commutateur SW au bout d'un temps déterminé.

Selon une autre possibilité, le circuit de commande comprend des moyens pour détecter la tension aux bornes de la diode D. Tant que cette tension est inférieure à V_{BR} et supérieure à V_{D}, le circuit de commande restera inactif. Ensuite, après une première chute de tension, le circuit de commande déterminera si la tension aux bornes de la diode D se trouve dans une certaine plage, correspondant à la valeur V_{DC}(R_{D}/(Ri+R_{D})). Le circuit de commande détermine alors la fermeture puis l'ouverture du commutateur SW.

Le fonctionnement du circuit de la figure 5 repose sur le fait que, quand le commutateur SW est à l'état passant, la tension à ses bornes chute suffisamment pour devenir inférieure à la valeur Vₕ définie précédemment. Ceci implique que la résistance à l'état passant Rₒₙ du commutateur SW doit être nettement inférieure à la résistance apparente R_{D} de la diode D quand le dispositif est en court-circuit. On comprendra que cela oblige à utiliser un commutateur à très faible Rₒₙ, ce qui n'est pas toujours compatible avec le souhait que l'on a d'utiliser des commutateurs à faible coût, par exemple des transistors MOS de petites dimensions.

La figure 6 illustre une variante de réalisation du dispositif de la figure 5, décrite dans les demandes de brevet français N°1352864 et US N°14229018 susmentionnées, et permettant de résoudre cet inconvénient. Dans la variante de la figure 6, le dispositif de protection comprend en outre, en série avec la diode à retournement D entre les bornes A et B, une diode à avalanche d de tension de claquage V_{br} nettement inférieure à la tension de claquage V_{BR} de la diode à retournement D. Le fonctionnement de l'ensemble en série de la diode à retournement D et de la diode à avalanche d est peu différent pour l'absorption d'une surtension du fonctionnement de la diode D seule. Cette fois-ci, quand la surtension est passée et que la ligne se trouve en court-circuit, il faut seulement que la condition RₒₙxI_{sc} < Vₕ + V_{br} soit satisfaite, ce qui permet d'utiliser un commutateur dont le Rₒₙ est plus élevé que dans le cas du montage de la figure 5.

Il existe toutefois un besoin d'améliorer au moins en partie certains aspects des dispositifs de protection connus.

### Résumé

Ainsi, un mode de réalisation prévoit un dispositif de protection contre des surtensions adapté à la protection d'une ligne d'alimentation, comprenant : une première branche comprenant une diode à retournement en série avec une diode à avalanche, les diodes étant connectées à un même noeud de la première branche appelé point milieu ; un commutateur commandable à l'état ouvert ou fermé, en parallèle de la première branche ; et un circuit de commande du commutateur connecté aux bornes de la diode à avalanche, dans lequel le circuit de commande comprend une première résistance connectée en parallèle de la diode à avalanche, l'extrémité de la première résistance connectée au point milieu de la première branche étant en outre reliée à un noeud de commande du commutateur.

Selon un mode de réalisation, la tension de claquage de la diode à avalanche est au moins dix fois plus faible que la tension de claquage de la diode à retournement.

Selon un mode de réalisation, la tension de claquage de la diode à retournement est comprise entre 20 et 1500 V.

Selon un mode de réalisation, le commutateur est un transistor MOS ou un transistor bipolaire à grille isolée.

Selon un mode de réalisation, l'extrémité de la première résistance connectée au point milieu de la première branche est connectée au noeud de commande du commutateur.

Selon un mode de réalisation, l'extrémité de la première résistance connectée au point milieu de la première branche est reliée au noeud de commande du commutateur par l'intermédiaire d'une deuxième résistance.

Selon un mode de réalisation, le noeud de commande du commutateur est en outre relié à l'autre extrémité de la première résistance par l'intermédiaire d'un condensateur.

Selon un mode de réalisation, une diode est connectée en parallèle de la deuxième résistance.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1, décrite précédemment, représente la caractéristique courant-tension d'un dispositif de protection du type diode à avalanche ;
la figure 2, décrite précédemment, représente la caractéristique courant-tension d'un dispositif de protection de type à retournement ;
la figure 3, décrite précédemment, représente une diode de protection de type à retournement connectée à une ligne d'alimentation continue ;
la figure 4A, décrite précédemment, représente un schéma équivalent du montage de la figure 3 en court-circuit ;
la figure 4B, décrite précédemment, représente la caractéristique d'un dispositif à retournement dans le cas de la figure 4A ;
la figure 5, décrite précédemment, représente un exemple d'un dispositif de protection contre des surtensions ;
la figure 6, décrite précédemment, représente une variante du dispositif de protection de la figure 5 ;
la figure 7 représente un mode de réalisation d'un dispositif de protection contre des surtensions ;
la figure 8 représente un exemple de réalisation du dispositif de protection contre des surtensions selon l'invention;
la figure 9 représente un autre exemple de réalisation du dispositif de protection contre des surtensions selon l'invention; et
la figure 10 représente un autre exemple de réalisation du dispositif de protection contre des surtensions selon l'invention.

### Description détaillée

De mêmes éléments ont été désignés par de mêmes références aux différentes figures. Par ailleurs, dans la présente description, on utilise le terme "connecté" pour désigner une liaison électrique directe, sans composant électronique intermédiaire, par exemple au moyen d'une ou plusieurs pistes conductrices, et le terme "couplé" ou le terme "relié", pour désigner soit une liaison électrique directe (signifiant alors "connecté") soit une liaison via un ou plusieurs composants intermédiaires (résistance, condensateur, etc.).

Dans les dispositifs des figures 5 et 6, le circuit de commande (CONTROL) du commutateur SW est connecté d'une part aux bornes A et B de la branche comportant la diode de retournement D, et d'autre part à une borne ou à un noeud de commande du commutateur SW. Le circuit de commande commande le commutateur SW en fonction de la tension entre les noeuds A et B. Le circuit de commande peut comporter un processeur ou un autre programmateur ou circuit logique. Ainsi, le circuit de commande doit comporter une interface haute tension pour supporter la tension d'alimentation de la ligne. En outre, le circuit de commande doit comporter une capacité de stockage d'énergie pour fournir aux circuits logiques une tension d'alimentation continue de niveau inférieur à la tension d'alimentation de la ligne. Dans certaines applications, par exemple dans une centrale solaire, la tension d'alimentation de la ligne peut être particulièrement élevée, typiquement de l'ordre de plusieurs centaines de volts. Il en résulte que le circuit de commande (CONTROL) du commutateur SW est relativement onéreux et encombrant.

La figure 7 représente un exemple d'un mode de réalisation d'un dispositif de protection contre des surtensions. Ce dispositif comprend, comme dans l'exemple de la figure 6, entre deux bornes A et B, le montage en parallèle :
- d'une première branche comportant une diode de protection de type à retournement D en série avec une diode à avalanche d ; et
- d'un commutateur SW.

La diode à avalanche d a une tension de claquage V_{br} inférieure à la tension de claquage V_{BR} de la diode à retournement D. De préférence, la tension de claquage V_{br} de la diode à avalanche d est nettement plus faible, par exemple au moins dix fois plus faible, que la tension de claquage V_{BR} de la diode à retournement. Dans l'exemple représenté, la diode à retournement D a son anode connectée à la borne A et sa cathode connectée à un noeud ou une borne C de la première branche. La diode à avalanche d a sa cathode connectée au noeud C et son anode connectée à la borne B. A titre d'exemple, la diode à retournement D a une tension de claquage comprise entre 20 et 1500 V.

Le commutateur SW est par exemple un transistor MOS ou un IGBT (de l'anglais "Insulated Gate Bipolar Transistor" - transistor bipolaire à grille isolée). A titre d'exemple, le commutateur SW est un IGBT de type PNP dont le collecteur est connecté à la borne A et dont l'émetteur est connecté à la borne B.

Le dispositif de protection de la figure 7 diffère du dispositif de la figure 6 en ce que le circuit de commande (CONTROL) du dispositif de la figure 6, connecté entre les bornes A et B dans l'exemple de la figure 6, est remplacé par un circuit 70 connecté d'une part aux bornes de la diode à avalanche d (c'est-à-dire aux noeuds C et B dans cet exemple), et d'autre part à une borne ou à un noeud de commande du commutateur SW. Ainsi, dans le mode de réalisation de la figure 7, le circuit de commande 70 de l'interrupteur SW n'est pas connecté aux bornes A et B de connexion du dispositif de protection à la ligne d'alimentation.

Le fonctionnement du dispositif de protection de la figure 7 est similaire à celui du dispositif de la figure 6, à la différence près qu'au lieu de commander le commutateur SW en fonction de la tension entre les bornes A et B, le circuit de commande 70 commande le commutateur SW en fonction de la tension aux bornes de la diode à avalanche d.

Un avantage du mode de réalisation de la figure 7 est que le circuit de commande peut être considérablement simplifié par rapport au circuit de commande des dispositifs des figures 5 et 6.

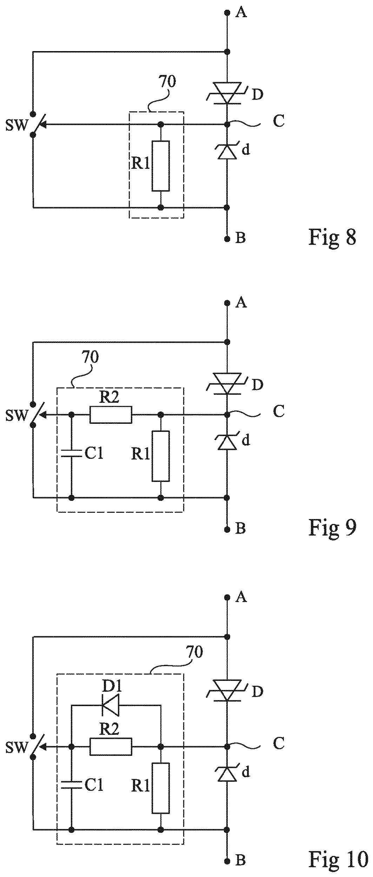

La figure 8 représente un exemple de réalisation du circuit de commande 70 selon l'invention. Dans l'exemple de la figure 8, le circuit 70 est réduit à une simple résistance R1 connectée entre les noeuds C et B, en parallèle de la diode à avalanche d. L'extrémité de la résistance R1 connectée au noeud C de l'association est en outre connectée à la grille de commande du commutateur SW. Ainsi, dans cet exemple, la tension aux bornes de la diode à avalanche d est directement utilisée pour commander le commutateur SW. La résistance R1 est de préférence nettement supérieure à la résistance à l'état passant de la diode à avalanche d. A titre d'exemple, la valeur de la résistance R1 est comprise entre 1 et 100 kΩ.

Le fonctionnement du dispositif de protection de la figure 8 est le suivant.

Tant que la tension entre les bornes A et B reste inférieure à la tension de claquage de la diode à retournement D, le dispositif de protection est non passant. La résistance R1 permet de ramener le potentiel du noeud C sensiblement au potentiel du noeud B (par exemple connecté à la masse), de sorte que le commutateur SW est bloqué. Quand une surtension apparaît, la diode à retournement D et la diode à avalanche d deviennent passantes et l'alimentation reliée entre les bornes A et B est en court-circuit. La tension aux bornes de la diode à avalanche d passe alors d'une valeur nulle à une valeur sensiblement égale à V_{br}, ce qui provoque la fermeture du commutateur SW. Ainsi, le commutateur SW devient passant en même temps ou presque en même temps que les diodes D et d. Le courant lié à la surtension est partagé entre le commutateur SW et la branche comportant les diodes D et d. Le commutateur SW absorbe ce qu'il peut absorber de courant jusqu'à saturation, le reste (en pratique la plus grande part du courant) étant absorbé par les diodes D et d. Une fois la surtension passée, le courant circulant dans le dispositif de protection diminue et devient égal au courant de court-circuit I_{SC} de l'alimentation. L'interrupteur SW est dimensionné pour pouvoir absorber l'intégralité ou la majeure partie de ce courant, de façon que la diode à retournement D se bloque. Le potentiel du noeud C est alors ramené sensiblement au potentiel du noeud B par l'intermédiaire de la résistance R1, et le commutateur SW se bloque. En pratique, le commutateur SW peut se bloquer légèrement après la diode à retournement D du fait de la capacité parasite entre sa grille de commande et la borne B, qui forme un circuit RC parallèle avec la résistance R1.

La figure 9 représente un autre exemple de réalisation du circuit de commande 70 selon l'invention. Dans l'exemple de la figure 9, le circuit 70 comprend la même résistance R1 que dans l'exemple de la figure 8, et comprend en outre un circuit RC comportant une résistance R2 reliant l'extrémité de la résistance R1 connectée au noeud C à la grille de commande du commutateur SW, et un condensateur C1 reliant la grille de commande du commutateur SW à la borne B.

Le fonctionnement du dispositif de la figure 9 est similaire à celui du dispositif de la figure 8, mais diffère du fonctionnement décrit en relation avec la figure 8 en ce que, lorsqu'une surtension apparaît, le commutateur est fermé avec un temps de retard par rapport au déclenchement des diodes D et d, ce temps de retard étant fixé par le circuit RC formé par la résistance R2 et le condensateur C1. Ainsi, au moins une partie de la surtension peut être évacuée par les diodes D et d avant que le commutateur SW ne soit fermé. Une fois la surtension passée et la diode D bloquée, le commutateur SW se bloque avec un temps de retard fixé par le circuit RC.

Ainsi, le circuit de la figure 9 permet de fixer un délai souhaité entre le déclenchement des diodes D et d et la fermeture du commutateur SW, et entre le blocage des diodes D et d et l'ouverture du commutateur SW.

A titre d'exemple, les valeurs de la capacité C1 et de la résistance R2 sont choisies de façon à obtenir une constante de temps, et donc un temps de retard entre le déclenchement de la protection et la fermeture du commutateur SW, compris entre 5 et 100 µs, par exemple d'environ 20 ms. La capacité du condensateur C1 est par exemple comprise entre 20 nF et 2 µF, et la résistance R2 a par exemple une valeur comprise entre 10 Ω et 1 kΩ.

A titre de variante, la capacité C1 peut être omise, le temps de retard entre le déclenchement de la protection et la fermeture du commutateur SW étant alors fixé par le circuit RC formé par la résistance R2 et la capacité intrinsèque du commutateur SW entre son noeud de commande et la borne B (par exemple la capacité grille-source dans le cas d'un transistor MOS, ou la capacité grille-émetteur dans le cas d'un IGBT).

La figure 10 représente un autre exemple de réalisation du circuit de commande 70 selon l'invention. Dans l'exemple de la figure 10, le circuit 70 comprend les mêmes éléments que dans l'exemple de la figure 9, et comprend en outre, en parallèle de la résistance R2, une diode D1 dont l'anode est connectée au noeud C et dont la cathode est connectée à la grille de commande du commutateur SW.

Le fonctionnement du dispositif de la figure 10 est similaire à celui du dispositif de la figure 9, à ceci près que, du fait de la présence de la diode D1, le commutateur devient passant sensiblement au même moment que les diodes D et d lorsqu'une surtension survient. Ainsi, le circuit RC a pour effet de retarder la réouverture du commutateur SW en fin de surtension, mais ne retarde pas sa fermeture en début de surtension.

Les dispositifs de protection du type décrit en relation avec les figures 7 à 10 présentent les avantages des dispositifs des figures 5 et 6. En particulier, ils permettent d'utiliser une diode à retournement de relativement faible surface, par exemple 50 mm², alors que comme on l'a indiqué précédemment, pour des tensions de protection de l'ordre de 50 à 1000 volts, des diodes de protection à avalanche devraient avoir des surfaces de l'ordre de 1 à 10 cm². L'ensemble du dispositif de commutation SW, par exemple un transistor MOS ou IGBT, et du circuit de commande aura par exemple une surface de l'ordre de seulement 10 à 15 mm². Ainsi, la surface totale du dispositif de protection est inférieure à 65 mm², et on pourra remplir la fonction assurée par un composant de protection à avalanche d'une surface de 1 à 10 cm².

Un avantage supplémentaire des modes de réalisation décrits en relation avec les figures 7 à 10 est que du fait de la connexion du circuit de commande 70 aux bornes de la diode à avalanche d, l'architecture du circuit de commande peut être considérablement simplifiée par rapport aux exemples des figures 5 et 6. En particulier, un circuit de commande sans circuits logiques ni programmateur ou processeur, et sans condensateur de stockage d'énergie d'alimentation, peut être réalisé. En outre, les modes de réalisation décrits ne nécessitent pas de réaliser une mesure précise de la tension ou du courant dans la branche comportant les diodes D et d.

Des modes de réalisation particuliers ont été décrits. Diverses variantes et modifications apparaîtront à l'homme de l'art.

En particulier, les modes de réalisation décrits ne se limitent pas aux exemples de réalisation du circuit de commande 70 décrits en relation avec les figures 8, 9 et 10. L'homme de l'art saura adapter les exemples décrits selon l'application visée, notamment en vue de réaliser des compromis en termes de dimensionnement du commutateur SW, de la diode à retournement D, et de la diode à avalanche d. En particulier, bien que l'on ait décrit des exemples de circuits 70 constitués uniquement de composants passifs, des composants actifs tels que des transistors peuvent être ajoutés au circuit de commande du commutateur SW, notamment pour contrôler plus précisément les instants de fermeture et d'ouverture du commutateur SW.

En outre, on a décrit et représenté sur les figures uniquement des diodes de protection unidirectionnelles. Bien entendu, on pourra également prévoir des diodes de protection bidirectionnelles (dont les caractéristiques sont illustrées en figures 1 et 2 bien que non décrites).

De plus, on a décrit l'utilisation du composant de protection uniquement en association avec une ligne polarisée à une tension continue. Ce composant pourra également être utilisé dans le cas où la ligne est une ligne d'alimentation alternative, par exemple à 50 ou 60 Hz. En effet, si la surtension survient au début d'une alternance, on peut souhaiter que la diode de protection cesse d'être conductrice rapidement après l'occurrence d'une surtension sans attendre la fin d'une alternance, la durée d'une alternance étant de 10 ms dans le cas d'une alimentation à 50 Hz.

## Revendications

1. Dispositif de protection contre des surtensions adapté à la protection d'une ligne d'alimentation, comprenant :
une première branche comprenant une diode à retournement (D) en série avec une diode à avalanche (d), lesdites diodes étant connectées à un même noeud (C) de la première branche appelé point milieu ;
un commutateur (SW) commandable à l'état ouvert et à l'état fermé, en parallèle de la première branche ; et
un circuit (70) de commande du commutateur (SW), charactérisé en ce que le circuit de commande étant connecté aux bornes de la diode à avalanche (d),
dans lequel le circuit de commande (70) comprend une première résistance (R1) connectée en parallèle de la diode à avalanche (d), l'extrémité de la première résistance (R1) connectée au point milieu (C) de la première branche étant en outre reliée à un noeud de commande du commutateur (SW).

2. Dispositif selon la revendication 1, dans lequel la tension de claquage (V_{br}) de la diode à avalanche (d) est au moins dix fois plus faible que la tension de claquage (V_{BR}) de la diode à retournement (D).

3. Dispositif selon la revendication 1 ou 2, dans lequel la tension de claquage (V_{BR}) de la diode à retournement (D) est comprise entre 20 et 1500 V.

4. Dispositif selon l'une quelconque des revendications 1 à 3, dans lequel le commutateur (SW) est un transistor MOS ou un transistor bipolaire à grille isolée.

5. Dispositif selon l'une quelconque des revendications 1 à 4, dans lequel l'extrémité de la première résistance (R1) connectée au point milieu (C) de la première branche est connectée au noeud de commande du commutateur (SW).

6. Dispositif selon l'une quelconque des revendications 1 à 4, dans lequel l'extrémité de la première résistance (R1) connectée au point milieu (C) de la première branche est reliée au noeud de commande du commutateur (SW) par l'intermédiaire d'une deuxième résistance (R2).

7. Dispositif selon la revendication 6, dans lequel le noeud de commande du commutateur (SW) est en outre relié à l'autre extrémité de la première résistance (R1) par l'intermédiaire d'un condensateur (C1).

8. Dispositif selon la revendication 7, dans lequel une diode (D1) est connectée en parallèle de la deuxième résistance (R2) .

## Patentansprüche

1. Schutzvorrichtung gegen Überspannungen, die in der Lage ist, eine Stromversorgungsleitung zu schützen, wobei die Schutzvorrichtung Folgendes aufweist:
einen ersten Zweig, der eine Break-Over-Diode (D) in Reihe mit einer Avalanche-Diode (d) aufweist, wobei die Dioden mit einem gleichen Knoten (C) des ersten Zweigs, dem sogenannten Mittelpunkt, verbunden sind;
einen Schalter (SW), der in einem Aus-Zustand und in einem Ein-Zustand steuerbar ist, parallel zu dem ersten Zweig; und
eine Schaltung (70) zum Steuern des Schalters (SW),
**dadurch gekennzeichnet, dass** die Schaltung zum Steuern mit den Anschlüssen der Avalanche-Diode (d) verbunden ist,
wobei die Steuerschaltung (70) einen ersten Widerstand (R1) aufweist, der parallel zu der Avalanche-Diode (d) geschaltet ist, wobei das Ende des ersten Widerstandes (R1), das mit dem Mittelpunkt (C) des ersten Zweiges verbunden ist, ferner mit einem Steuerknoten des Schalters (SW) gekoppelt ist.

2. Vorrichtung nach Anspruch 1, wobei die Durchbruchsspannung (V_{br}) der Avalanche-Diode (d) mindestens zehnmal kleiner ist als die Durchbruchsspannung (V_{BR}) der Break-Over-Diode (D).

3. Vorrichtung nach Anspruch 1 oder 2, wobei die Durchbruchspannung (V_{BR}) der Break-Over-Diode (D) im Bereich von 20 bis 1.500 V liegt.

4. Vorrichtung nach einem der Ansprüche 1 bis 3, wobei der Schalter (SW) ein MOS-Transistor oder ein Bipolartransistor mit isoliertem Gate ist.

5. Vorrichtung nach einem der Ansprüche 1 bis 4, wobei das Ende des ersten Widerstands (R1), das mit dem Mittelpunkt (C) des ersten Zweigs verbunden ist, mit dem Steuerknoten des Schalters (SW) verbunden ist.

6. Vorrichtung nach einem der Ansprüche 1 bis 4, wobei das mit dem Mittelpunkt (C) des ersten Zweiges verbundene Ende des ersten Widerstandes (R1) über einen zweiten Widerstand (R2) mit dem Steuerknoten des Schalters (SW) verbunden ist.

7. Vorrichtung nach Anspruch 6, wobei der Steuerknoten des Schalters (SW) ferner über einen Kondensator (C1) mit dem anderen Ende des ersten Widerstandes (R1) verbunden ist.

8. Vorrichtung nach Anspruch 7, wobei eine Diode (D1) parallel zu dem zweiten Widerstand (R2) geschaltet ist.

## Claims

1. A device of protection against overvoltages capable of protecting a power supply line, comprising:
a first branch comprising a break-over diode (D) in series with an avalanche diode (d), said diodes being connected to a same node (C) of the first branch called midpoint;
a switch (SW) controllable in an off state and in an on state, in parallel with the first branch; and
a circuit (70) for controlling the switch (SW), **characterized in that** the circuit for controlling is connected across the avalanche diode (d),
wherein the control circuit (70) comprises a first resistor (R1) connected in parallel with the avalanche diode (d), the end of the first resistor (R1) connected to the midpoint (C) of the first branch being further coupled to a control node of the switch (SW).

2. The device of claim 1, wherein the breakdown voltage (V_{br}) of the avalanche diode (d) is at least ten times smaller than the breakdown voltage (V_{BR}) of the break-over diode (D).

3. The device of claim 1 or 2, wherein the breakdown voltage (V_{BR}) of the break-over diode (D) is in the range from 20 to 1,500 V.

4. The device of any of claims 1 to 3, wherein the switch (SW) is a MOS transistor or an insulated-gate bipolar transistor.

5. The device of any of claims 1 to 4, wherein the end of the first resistor (R1) connected to the midpoint (C) of the first branch is connected to the control node of the switch (SW).

6. The device of any of claims 1 to 4, wherein the end of the first resistor (R1) connected to the midpoint (C) of the first branch is connected to the control node of the switch (SW) via a second resistor (R2).

7. The device of claim 6, wherein the control node of the switch (SW) is further connected to the other end of the first resistor (R1) via a capacitor (C1).

8. The device of claim 7, wherein a diode (D1) is connected in parallel with the second resistor (R2).
